# EUROPÄISCHE PATENTSCHRIFT

(11) **EP 0 817 723 B1**
(45) Veröffentlichungstag und Bekanntmachung des Hinweises auf die Patenterteilung: **07.06.2000**
(21) Anmeldenummer: 96908144.7
(22) Anmeldetag: 29.03.1996
(51) Int. Cl.: B32B 18/00, C04B 35/117, C04B 35/488

(54) **VERFAHREN ZUR HERSTELLUNG VON SCHWINDUNGSANGEPASSTEN KERAMIK-VERBUNDWERKSTOFFEN**
PROCESS FOR PRODUCING SHRINKAGE-MATCHED CERAMIC COMPOSITE MATERIALS
PROCEDE DE FABRICATION DE MATERIAUX COMPOSITES CERAMIQUES ADAPTES AU RETRAIT

(30) Priorität: 31.03.1995 DE 19512146
(43) Veröffentlichungstag der Anmeldung: 14.01.1998
(73) Patentinhaber: INSTITUT FÜR NEUE MATERIALIEN gemeinnützige GmbH, 66123 Saarbrücken (DE)
(72) Erfinder: RAVAGNI, Alberto, D-66125 Saarbrücken (DE); NASS, Rüdiger, D-66292 Riegelsberg (DE); SCHMIDT, Helmut, D-66130 Saarbrücken (DE); WALTER, Bernhard, D-66386 St.-Ingbert (DE)
(74) Vertreter: Barz, Peter, Dr.
(86) Internationale Anmeldenummer: EP9601401
(87) Internationale Veröffentlichungsnummer: WO9630207

(56) Entgegenhaltungen:
- EP-A- 0 426 546
- DE-A- 4 317 174
- US-A- 4 957 673

## Beschreibung

Die vorliegende Erfindung betrifft ein Verfahren zur Herstellung von schwindungsangepaßten Verbundwerkstoffen, die mindestens eine keramische Werkstoff-Schicht umfassen, und die durch dieses Verfahren erhältlichen Verbundwerkstoffe.

Bei der Herstellung von werkstoffbasierten Bauteilen und Komponenten besteht häufig die Aufgabe, verschiedene Materialien (z.B. Keramik und Metall oder Keramik I und Keramik II) miteinander zu einer Einheit zu kombinieren. Werden derartige Werkstoffverbunde über pulvermetallurgische Verfahren hergestellt, wird häufig zusätzlich gefordert, ungleiche Materialpaarungen zunächst im ungebrannten Zustand zu realisieren, um sie dann in einen gemeinsamen Sinterzyklus (Co-firing) zu dem eigentlichen Produkt zu sintern.

Bei der Herstellung ungleicher Materialpaarungen über Sinterprozesse tritt aber das grundsätzliche Problem auf, daß jede Komponente über spezifische werkstoffphysikalische Eigenschaften, wie z.B. E-Modul, thermischer Ausdehnungskoeffizient und Stofftransporteigenschaften (Sinteraktivität) verfügt. Die Unterschiede in der Sinteraktivität führen während des Sinterprozesses zu unterschiedlichen Schwindungen, so daß es bereits während der Verdichtungsphase zu Verzugserscheinungen bzw. zur vollständigen Zerstörung der Komponente kommen kann. Weiter weisen intakte Bauteile häufig sehr hohe Eigenspannungen auf, die zum einen auf die unterschiedlichen Sinterschwindungen und zum anderen auf die Unterschiede in den thermischen Ausdehnungskoeffizienten der beteiligten Materialien zurückzuführen sind. Es hat daher nicht an Versuchen gefehlt, die Probleme der unterschiedlichen Sinterschwindungen und thermischen Ausdehnungskoeffizienten durch werkstofftechnische Maßnahmen in den Griff zu bekommen. Zu den verbreitetsten Techniken gehört die Anwendung von niedrigsinternden Glasphasen, über die in Verbindung mit entsprechenden Ausgangspulvern Sintertemperatur und Sinterschwindung angepaßt werden. Für viele Anwendungen können Glasphasen jedoch nicht eingesetzt werden, da sie die werkstoffphysikalischen Eigenschaften einer oder mehrerer Komponenten ungünstig beeinflussen bzw. die benötigten Eigenschaften im System gar nicht erst erreicht werden. In diesen Fällen versucht man, die unterschiedlichen Materialpaarungen über die Korngrößenabhängigkeit der Sinteraktivität von Pulvern zu realisieren. Diese Methode der Sinterschwindungsanpassung ist zwar für viele Materialkombinationen anwendbar, ist aber mit erheblichem technischen und finanziellen Aufwand verbunden. In aufwendigen Verfahren müssen die Korngrößenverteilungen der Komponenten aufeinander abgestimmt werden, bzw. es müssen zunächst Pulver in entsprechender Feinheit hergestellt werden. Allen Techniken ist gemeinsam, daß neben ausgewählten Rohstoffen auch noch organische Additive benötigt werden. Die Aufgabe dieser Additive besteht zum einen darin, die Pulver homogen und deagglomeriert in einem Dispergiermedium zu verteilen. Zum anderen aber übernehmen sie die Funktion von Prozeßhilfsmitteln, über die die rheologischen Eigenschaften bzw. die Verarbeitbarkeit der keramischen Massen den Erfordernissen des jeweiligen Formgebungsverfahrens angepaßt werden. Je nach Formgebungsverfahren kann der Organikanteil dabei bis zu 50 Vol.-% betragen, der vor dem Sintern z.T. durch aufwendige und langwierige Verfahren entfernt werden muß. Besonders schwierig wird dieser Schritt, wenn verschiedene Materialien wie z.B. Keramik/Metall zu einem Teil zusammengefügt sind, da das Austreiben der organischen Prozeßhilfsmittel dann noch zusätzlich unter inerten Bedingungen erfolgen muß. Um diese Schwierigkeiten und Einschränkungen zu überwinden, wäre es außerordentlich erstrebenswert, Techniken, Verfahren oder Materialien zu entwickeln, die eine sehr weitgehende Anpassung der Sinterschwindungen bei Verwendung von ungleichen Materialien zulassen und gleichzeitig ohne Zusatz organischer Prozeßhilfsmittel bzw. stark reduzierten Gehalten derselben auskommen. Im Idealfall sollte die Aufgabe der organischen Prozeßhilfsmittel von anorganischen Materialien übernommen werden, die sich beim Sintern in den keramischen Werkstoff umwandeln.

In der DE-A-43 17 174 werden Verbundsysteme mit mindestens zwei keramischen Schichten beschrieben, wobei in einer Schicht nanoskalige Aluminiumoxid-Pulver und in einer anderen Zirkoniumoxid-Pulver mit Teilchengrößen im Mikrometerbereich eingesetzt werden und gemeinsam zu dichten, weitgehend von Makroporen freien Phasen gesintert werden. In der EP-A-426 546 werden keramische Filter beschrieben, bei der Aluminiumoxid-Aggregate zu einem porösen Träger gesintert werden und anschließend mehrere keramische Schichten aufgebracht und gesintert werden, wobei in einer Schicht keramische Teilchen mit einem Teilchendurchmesser von nicht mehr als 30 nm enthalten sind.

Die Aufgabe der vorliegenden Erfindung bestand in der Bereitstellung eines Verfahrens zur Herstellung von Verbundwerkstoffen, die mindestens eine keramische Werkstoff-Komponente umfassen, mit dem sich das Schwindungsverhalten dieser mindestens einen keramischen Werkstoff-Komponente beim Sintern demjenigen der übrigen keramischen und/oder nicht-keramischen Werkstoff-Komponenten anpassen läßt.

Überraschenderweise wurde gefunden, daß die obige Aufgabe durch Verwendung nanoskaliger keramischer Pulver als Ausgangsmaterial (bzw. Bestandteil davon) für die keramische(n) Werkstoff-Komponente(n) , deren Schwindungsverhalten beim Sintern an die andere(n) Werkstoff-Komponente(n) angepaßt werden soll, gelöst wird. Durch dieses Verfahren ergeben sich gänzlich neue Möglichkeiten bei der Gestaltung von Materialpaarungen und gegebenenfalls einer Verdichtung über einen gemeinsamen Sinterzyklus.

Gegenstand der vorliegenden Erfindung ist somit ein Verfahren zur Herstellung von Verbundwerkstoffen, die mindestens eine schwindungsangepaßte keramische Werkstoff-Schicht umfassen, deren Schwindungsverhalten beim Sintern an die restliche(n) Werkstoff-Schicht(en) angepaßt werden soll, wobei die Schichten des Verbundwerkstoffes über eine Sintertechnik verbunden werden, das dadurch gekennzeichnet ist, daß als Ausgangsmaterial für diese mindestens eine keramische Werkstoff-Schicht ein solches eingesetzt wird, dessen Keramik-bildender Bestandteil im wesentlichen besteht aus:
(a) mindestens einem keramischen Pulver (i) mit Teilchen einer Größe von bis zu 500 nm; oder
(b) mindestens einem keramischen Pulver (i) wie in (a) definiert in Mischung mit mindestens einem Pulver (ii) aus mindestens einer sinterinhibierenden Substanz mit einer Teilchengröße gleich oder kleiner derjenigen des Pulvers (i); oder
(c) mindestens einem keramischen Pulver (i) wie in (a) definiert in Mischung mit mindestens einem keramischen Pulver (iii) mit einer Teilchengröße oberhalb derjenigen des eingesetzten Pulvers (i) und bis zu 500 µm,
wobei im Fall (a) mindestens eine weitere keramische Werkstoff-Schicht vorliegt, deren Keramik-bildendes Ausgangsmaterial aus mindestens einem keramischen Pulver (iii) wie in (c) definiert besteht, das in Form von Agglomeraten vorliegt, und die keramischen Werkstoff-Schichten über einen gemeinsamen Sinterzyklus verbunden werden.

Das keramische Pulver (i) weist vorzugsweise Teilchen mit einer Größe von bis zu 300 nm und insbesondere bis zu 200 nm auf. Obwohl es keine kritische Untergrenze für die Teilchengröße gibt, liegt diese aus Gründen der Herstellbarkeit meistens bei etwa 1 nm. Außerdem kann das keramische Pulver (i) - wie im übrigen auch die anderen eingesetzten keramischen Pulver - vorbehandelt eingesetzt werden; diese Vorbehandlung kann insbesondere eine Oberflächenmodifizierung der Pulver-Teilchen mit kurzkettigen (vorzugsweise bifunktionellen) organischen oder metallorganischen Verbindungen, wie sie z.B. in der DE-A-4212633 beschrieben ist, einschließen. Zweck dieser Vorbehandlung kann es z.B. sein, die Rheologie des Versatzes und/oder (insbesondere bei nanoskaligen Pulvern) den Feststoffgehalt einzustellen.

Die Teilchen der in der vorliegenden Erfindung eingesetzten keramischen Pulver können verschiedene Gestalten aufweisen, zum Beispiel sphärisch, plättchenförmig, faserförmig usw. Die Teilchengröße, wie sie hierin verwendet wird, bezieht sich jeweils auf die längste Abmessung dieser Teilchen, die zum Beispiel im Falle von kugelförmigen Teilchen dem Durchmesser entspricht. Außerdem können aus diesen Pulvern z.B. zunächst Agglomerate hergestellt werden, die man dann thermisch nachbehandelt, um die Sinteraktivität einzustellen.

Die in der vorliegenden Erfindung eingesetzten keramischen Werkstoffe sind vorzugsweise von Metall(misch)oxiden und Carbiden, Nitriden, Boriden, Siliciden und Carbonitriden von Metallen und Nichtmetallen abgeleitet. Beispiele hierfür sind zum Beispiel (gegebenenfalls hydratisiertes) Al_{**2**}O_{**3**}, teil- und vollstabilisiertes ZrO_{**2**}, Mullit, Cordierit, Perowskite, Spinelle, z.B. BaTiO_{**3**}, PZT, PLZT usw., sowie SiC, Si_{**3**}N_{**4**}, B_{**4**}C, BN, MoSi_{**2**}, TiB_{**2**}, TiN, TiC und Ti(C,N). Selbstverständlich können auch Mischungen von Oxiden bzw. Nichtoxiden und Mischungen aus Oxiden und Nichtoxiden eingesetzt werden. Besonders bevorzugte keramische Ausgangsmaterialien sind (α- bzw. γ-)Al_{**2**}O_{**3**} und ZrO_{**2**} (in unstabilisierter, teil- oder vollstabilisierter Form).

Die obige Alternative (b) des erfindungsgemäßen Verfahrens ist insbesondere dann von Interesse, wenn Verbunde aus einem relativ sinterträgen (keramischen) Pulver und einem Pulver (i) hergestellt werden sollen (z.B. bei der Herstellung von Filtern). In diesem Fall muß das Schwindungsverhalten des (sehr sinteraktiven) Pulvers (i) demjenigen des gröberen Pulvers angepaßt werden. Dazu werden sinterinhibierende Sekundärphasen in Form des Pulvers (ii) eingesetzt. Um welche Materialien es sich beim Pulver (ii) konkret handelt, hängt von der Natur des Pulvers (i) ab. Für α-Al_{**2**}O_{**3**} als Pulver (i) können zum Beispiel SiC, Mullit oder ZrO_{**2**} als Pulver (ii) eingesetzt werden. Auf diese Weise gelingt es zum Beispiel, über einen gemeinsamen Sinterzyklus ein poröses Al_{**2**}O_{**3**}-Substrat, d.h. grobes Al_{**2**}O_{**3**} mit sehr geringer Sinteraktivität, mit einer dünnen Al_{**2**}O_{**3**}/SiC-Schicht zu versintern und in der Al_{**2**}O_{**3**}/SiC-Schicht definierte Poren, deren Größe von der Größe der Teilchen im Pulver (i) abhängen, einzustellen. Dies ist mit bekannten Techniken nicht möglich.

Das Pulver (ii) muß so beschaffen sein, daß seine Teilchengröße kleiner oder gleich derjenigen des damit in Kombination eingesetzten Pulvers (i) ist. Weiter ist das Pulver (ii) vorzugsweise ein keramisches Pulver. Das Gewichtsverhältnis von Pulver (i) zu Pulver (ii) (und im Fall der Alternative (c) zu Pulver (iii)) ist nicht kritisch und hängt von den Gegebenheiten des Einzelfalles ab.

Das erfindungsgemäß eingesetzte Pulver (iii) kann z.B. ein kommerziell erhältliches Sinterpulver oder davon abgeleitetes Agglomerat (Granulat) sein. Es kann sich dabei aber auch um ein von einem Pulver (i) abgeleitetes Agglomerat handeln. Im Fall (a) liegt mindestens eine weitere keramische Werkstoff-Schicht vor, deren Keramik-bildendes Ausgangsmaterial aus mindestens einem keramischen Pulver (iii) wie in (c) definiert besteht, das in Form von Agglomeraten vorliegt.

Die eine oder gegebenenfalls mehreren restliche(n) Werkstoff-Komponente(n) des erfindungsgemäß herzustellenden Verbundwerkstoffes kann (können) aus verschiedenen Materialien ausgewählt werden, die sich in Kombination mit einem keramischen Material zu einem brauchbaren Verbundwerkstoff verarbeiten lassen und einem Sintervorgang standhalten können. Erfindungsgemäß bevorzugte weitere Werkstoff-Komponenten werden aus keramischen und/oder metallischen Materialien und/oder aus Glas ausgewählt. Besonders bevorzugt besteht mindestens eine weitere Werkstoff-Komponente aus keramischem Material, bevorzugt einem Material, dessen Ausgangskomponenten aus dem obigen keramischen Pulver (iii), z.B. einem keramischen Pulver (iv), in dem Primärteilchen einer Größe von bis zu 500 nm, vorzugsweise bis zu 300 nm, in Form von Agglomeraten vorliegen, ausgewählt sind. Im übrigen ist es selbstverständlich auch möglich, daß der erfindungsgemäß herzustellende Verbundwerkstoff mehrere von den Alternativen (a), (b) und (c) abgeleitete Werkstoff-Komponenten umfaßt.

Erfindungsgemäß besonders bevorzugt ist es, wenn die chemische Zuammensetzung aller zur Herstellung eines Verbundmaterials eingesetzten Pulver (i), (iii) und (iv) identisch ist.

Die obigen keramischen Pulver (iv) mit agglomerierten Primärteilchen können aus den entsprechenden Pulvern (i) durch herkömmliche Verfahren hergestellt werden. Konkrete Beispiele für derartige Herstellungsverfahren werden unten in den Beispielen angegeben.

Die Herstellung der erfindungsgemäß erhältlichen Verbundwerkstoffe mit mindestens einer schwindungsangepaßten keramischen Werkstoff-Komponente kann mit Hilfe eines beliebigen Verfahrens, das für die Herstellung eines ins Auge gefaßten konkreten Verbundwerkstoffes geeignet ist, durchgeführt werden. Beispiele hierfür sind Pressen, Elektrophorese, Gel-Casting, Walzen, Schlickergießen, Spritzgießen, Foliengießen, Druckschlickerguß und Laminieren. Derartige Verfahren sind dem Fachmann wohlbekannt. Auch die Verarbeitung des keramischen Ausgangsmaterials zur fertigen Keramik erfolgt auf übliche Art und Weise. Beispiele hierfür werden ebenfalls in den Ausführungsbeispielen angegeben.

Mit Hilfe des erfindungsgemäßen Verfahrens sind z.B. (mehrlagige) Gradientenwerkstoffe zugänglich, in denen ein poröser Träger mit einer dichten Schicht versehen ist oder ein grobporöser Träger mit einer feinporösen Schicht versehen ist, wobei die Porengröße und Porosität auch über den Sinterprozeß eingestellt werden kann. Selbstverständlich können auch Mehrlagenstrukturen, in denen jede Schicht dicht ist, erfindungsgemäß hergestellt werden. Dasselbe gilt für Mehrlagenstrukturen, bei denen z.B. poröse und dichte Schichten alternierend vorliegen, wobei die Schichten aus identischen oder unterschiedlichen Materialien bestehen können. Erfindungsgemäß kann man z.B. Verbunde (aus ausschließlich keramischem Material) im grünen Zustand in einem gemeinsamen Sinterzyklus versintern oder grüne und gesinterte Teile über eine Sintertechnik verbinden.

Erfindungsgemäß besonders bevorzugte Verbundwerkstoffe sind aus keramischen Folien aufgebaute mehrschichtige (z.B. zweischichtige) Strukturen, insbesondere Filter bzw. Filter-Komponenten. Eine andere bevorzugte Ausführungsform stellen Verbunde aus keramischen Folien und Metallen dar.

Das erfindungsgemäße Verfahren weist verschiedene Vorteile auf. Insbesondere können gemäß Alternative (a) im Vergleich zu Verfahren, die Pulver mit deutlich größeren Teilchengrößen einsetzen, deutlich höhere Sinteraktivitäten (d.h. deutlich niedrigere Sintertemperaturen) erzielt werden. Gleichzeitig sind auch völlig neue Materialkombinationen möglich, z.B. im Bereich Keramik/Metall, die über einen gemeinsamen Sinterzyklus verdichtet werden können. Ein weiterer wichtiger Aspekt ist, daß sich beim sequentiellen Aufbau von zum Beispiel Mehrlagenstrukturen Vorteile ergeben. So können auf gesinterten Unterlagen neue Materialkombinationen und Konstruktionsdesigns verwirklicht werden. Ebenso ist die Versiegelung bzw. der Ausgleich von Oberflächenfehlern durch dünne Schichten aus Keramik möglich.

Auf die Vorteile der Alternative (b) wurde bereits oben kurz eingegangen.

Gemäß der Alternative (c) kann durch Variation der Massenanteile von Pulver (i) und dem Pulver (iii) das Schwindungsverhalten bequem angepaßt werden. Besonders interessant sind die Möglichkeiten, die sich aus der Verwendung eines Pulvers (iii), das durch Agglomeration aus dem Pulver (i) hergestellt wurde (Pulver (iv)), zusammen mit einem reinen Pulver (i) ergeben. Dies sei kurz an einer zweischichtigen Struktur erläutert:
Zunächst wird eine Folie A aus den Pulvern (i) und (iv) hergestellt. Auf diese Folie A wird eine zweite Folie B, die aus dem Pulver (i) hergestellt ist, aufgegossen bzw. laminiert. In einem gemeinsamen Sinterprozeß können die beiden Folien zu einem spannungsfreien Verbund versintert werden. Je nach Zusammensetzung von Folie A und den angewandten Sinterbedingungen können dabei dichte Werkstoffe, Werkstoffe mit dichter Schicht (Folie B) und porösem Träger (Folie A) oder poröser Schicht (Folie B) und porösem Träger (Folie A) erhalten werden. Dies ist mit bekannten Techniken nicht möglich.

Die vorliegende Erfindung wird im folgenden anhand von nicht beschränkenden Beispielen erläutert.

### Beispiel 1

In diesem Beispiel werden zwei Folien, A und B, hergestellt, aufeinander laminiert und gemeinsam gesintert. Folie A besteht aus agglomeriertem Zirkonoxid-Pulver (i) (d.h. Pulver (iv)); Folie B besteht aus dispergiertem Pulver (i) derselben Art. Die Verwendung einer einzigen Pulverart gewährleistet gleiches Schwindungsverhalten der zwei Folien. Weiterhin bestehen keine Unterschiede im thermischen Ausdehnungskoeffizienten.

### Herstellung der Folie A:

200 g kubisches ZrO_{**2**} (Teilchengröße 10 nm, 9 Mol-% Y_{**2**}O_{**3**}) werden in 800 g Wasser dispergiert. Vorhandene Agglomerate werden durch Ultraschall-Behandlung zerstört. Daraufhin wird die Suspension zur Herstellung eines Grünkörpers in Gipsformen gegossen.

Nach der Trocknung wird der resultierende Grünkörper bei 800°C 30 Minuten lang calciniert. Das calcinierte Material wird in einer Kugelmühle zerkleinert und durch Sieben werden Fraktionen mit unterschiedlichen Teilchendurchmessern im Bereich von 10 - 500 µm abgetrennt.

Alternativ wird das agglomerierte Pulver wie folgt hergestellt:

200 g kubisches ZrO_{**2**} (siehe oben) werden in 800 ml einer wäßrigen Lösung, die 20 g PVA (Polyvinylalkohol, Mowiol^{**R**} 26-88 der Firma Hoechst) enthält, dispergiert. Vorhandene Agglomerate werden durch Ultraschall-Behandlung zerstört. Daraufhin werden 0,2 g Glutardialdehyd als Vernetzer zugegeben und der pH-Wert der resultierenden Mischung wird durch Zugabe von HNO_{**3**} auf 2 eingestellt.

Die Suspension wird zur Herstellung eines Grünkörpers in Gipsformen gegossen. Der resultierende Grünkörper wird nach der Trocknung in einer Kugelmühle zerkleinert und durch Sieben werden Fraktionen mit unterschiedlichen Teilchendurchmessern im Bereich von 10 - 500 µm abgetrennt.

100 g des agglomerierten Pulvers werden einer wäßrigen Bindemittel-Lösung (enthaltend 10% PVA Mowiol^{**R**} 26-88) zugesetzt. Dies führt zu einem keramischen Schlicker mit einem Feststoffgehalt von 40 Gew.-%. Das Pulver/Bindemittel-Verhältnis wird auf 5:1 eingestellt. Nach der Homogenisierung und Entgasung werden mit dem resultierenden Schlicker durch Foliengießen keramische Folien mit einer Dicke von 1 mm hergestellt.

### Herstellung der Folie B:

Die Folie B besteht aus dispergierten ZrO_{**2**}-Teilchen in einem organischen Bindemittel-System. Zur Herstellung werden zunächst 10 g kubischer ZrO_{**2**} (Teilchengröße 10 nm, 9 Mol-% Y_{**2**}O_{**3**}) in 90 g Wasser dispergiert. Anschließend werden 85 g des resultierenden Sols mit 15 g einer wäßrigen Bindemittel-Lösung versetzt und 2 Stunden homogenisiert. Bei der Bindemittel-Lösung handelt es sich um eine wäßrige Lösung mit 10 Gew.-% eines kommerziellen Bindemittel-Granulats (PVA Mowiol^{**R**} 30-92; Hoechst AG) und 2 Gew.-% Polyethylenglycol (Molekulargewicht 200; Firma Merck). Anschließend wird die Sol-Bindemittel-Mischung mit Hilfe des Foliengießverfahrens und anschließender Trocknung zu einer Schicht von 5 µm verarbeitet.

Die dünne Folie B und die Substratfolie A werden anschließend laminiert. Der so erhaltene Grünkörper wird bei 1150°C 2 Stunden lang gesintert. Die lineare Schwindung beider Folien beträgt 40%. Das Resultat ist eine 3 µm dicke dichte ZrO_{**2**}-Schicht auf einem 1 mm dicken porösen Träger aus ZrO_{**2**}.

### Beispiel 2

In diesem Beispiel wird eine Sandwich-Struktur bestehend aus 6 Schichten hergestellt. Die Schichten bestehen alternierend aus den Folien A und B, wie sie in Beispiel 1 beschrieben wurden.

Es werden 3 ungesinterte, grüne Bilayer-Strukturen aus Beispiel 1 zusammenlaminiert. Anschließen erfolgt das Co-firing der Struktur analog Beispiel 1.

### Beispiel 3

In diesem Beispiel wird eine Bilayer-Struktur durch Foliengießen einer Folie B über eine Folie A erzeugt. Die Struktur wird über Co-firing gesintert. Folie A wird aus einem feinen Korund-Pulver hergestellt und enthält α-SiC als Sinterinhibitor. Die Folie B besteht aus einer Pulvermischung von groben und feinen Korund-Teilchen.

### Herstellung der Folie A:

Zwei Suspensionen mit jeweils 40 Gew.-% Feststoffgehalt werden aus fraktioniertem α-Al_{**2**}O_{**3**} (CS400M Martinswerk, Teilchengröße 200 nm)-Pulver (Suspension A) bzw. SiC (ESK, Teilchengröße 200 nm)-Pulver (Suspension B) hergestellt. Der pH der Suspension A wird durch Zugabe von HNO_{**3**} auf 4 eingestellt, während der pH der Suspension B durch Zugabe von TMAH (Tetramethylammoniumhydroxid) auf 9 eingestellt wird.

Die Suspension B wird der Suspension A zugesetzt, bis ein SiC-Gehalt von 15 Gew.-%, bezogen auf Al_{**2**}O_{**3**}, erreicht ist.

Der gemischten Suspension wird eine Bindemittel-Lösung aus PVA (Mowiol^{**R**} 26-88, 20 Gew.-% in Wasser) zugegeben. Das Gewichtsverhältnis Pulver/Bindemittel beträgt 5/1. Nach der Homogenisierung und Entgasung des Suspension werden durch Foliengießen des Schlickers keramische Folien mit einer Dicke von 100 µm hergestellt.

### Herstellung der Folie B:

Der Schlicker für die Folie B besteht aus zwei Teilchensorten. Zunächst wird ein wäßriger Schlicker bestehend aus 20 Gew.-% Korund-Pulver mit einer Teilchengröße von 400 nm (CS400, Martinswerk) und 40 Gew.-% Korund-Pulver mit einer Teilchengröße von 10 µm (Amperit^{**R**}, HC Starck) angesetzt. Anschließend werden 95 g des Schlickers mit 5 g einer 25 Gew.-%igen wäßrigen PVA-Lösung (Mowiol^{**R**} 4-86) 2 Stunden lang homogenisiert.

Anschließend wird der Schlicker im Foliengießverfahren über die obige Folie A gegossen und getrocknet. Die Schichtdicke der oberen Folie B beträgt 3 mm.

Das Herstellungverfahren für die Bilayer-Struktur wird durch 2-stündiges Co-firing der Struktur bei 1500°C abgeschlossen. Die lineare Schwindung der Folie A beträgt 5%, diejenige der Folie B 4%.

### Beispiel 4

Beispiel 3 wird wiederholt, mit der einzigen Ausnahme, daß anstelle von SiC Mullit (Teilchengröße 200 nm) als Sinterinhibitor eingesetzt wird.

Die lineare Schwindung der Folie A beträgt 5%, diejenige der Folie B 4%.

### Beispiel 5

Beispiel 3 wird wiederholt, mit der einzigen Ausnahme, daß anstelle von SiC ZrO_{**2**} (Degussa, Teilchengröße 50 nm) als Sinterinhibitor eingesetzt wird.

Die lineare Schwindung der Folie A beträgt 5%, diejenige der Folie B 4%.

### Beispiel 6

In diesem Beispiel wird eine Bilayer-Struktur hergestellt. Dazu wird die Folie A über die Folie B gegossen und gemeinsam damit gesintert. Die Folie A besteht aus agglomeriertem Korund-Pulver; die Folie B besteht aus dispergiertem Pulver derselben Art. Die Verwendung einer einzigen Pulverart gewährleistet gleiches Schwindungsverhalten der zwei Folien.

Weiterhin bestehen keine Unterschiede im thermischen Ausdehnungskoeffizienten.

### Herstellung der Folie A:

500 g γ-Al_{**2**}O_{**3**} (Teilchengröße 40 - 50 nm, 0,1 Gew.-% MgO) werden in 500 g Wasser dispergiert. Vorhandene Agglomerate werden durch Ultraschall-Behandlung zerstört und die Suspension wird mittels organischer Dispergierhilfe (Polyacrylsäure, 1 Gew.-% bezogen auf das Pulver) stabilisiert. Dann wird die Suspension zur Herstellung eines Grünkörpers in Gipsformen gegossen.

Nach der Trocknung wird der Grünkörper bei 1000°C 30 Minuten lang calciniert. Das calcinierte Material wird in einer Kugelmühle zerkleinert und durch Sieben werden Fraktionen mit unterschiedlichen Teilchendurchmessern im Bereich von 10 - 500 µm abgetrennt.

### Alternativ kann das Pulver wie folgt hergestellt werden:

500 g γ-Al_{**2**}O_{**3**} (siehe oben) werden in 500 g einer wäßrigen Lösung, die 50 g PVA (Mowiol^{**R**} 26-88) enthält, dispergiert. Vorhandene Agglomerate werden durch Ultraschall-Behandlung zerstört und daraufhin werden 5 g Glutardialdehyd als Vernetzer zugegeben, worauf der pH-Wert durch Zugabe von HNO_{**3**} auf 2 eingestellt wird.

Die resultierende Suspension wird zwecks Herstellung eines Grünkörpers in Gipsformen gegossen. Nach der Trocknung wird der resultierende Grünkörper in einer Kugelmühle zerkleinert und durch Sieben werden Fraktionen mit unterschiedlichen Teilchendurchmessern im Bereich von 10 - 500 µm abgetrennt.

100 g des agglomerierten Pulvers werden einer wäßrigen Bindemittel-Lösung (10 Gew.-% PVA Mowiol^{**R**} 26-88) zugegeben. Dies führt zu einem keramischen Schlicker mit 40 Gew.-% Feststoffgehalt. Das Pulver/Bindemittel-Verhältnis wird auf 5:1 eingestellt. Nach der Homogenisierung und Entgasung werden mit dem resultierenden Schlicker durch Foliengießen keramische Folien mit einer Dicke von 1 mm hergestellt.

### Herstellung der Folie B:

Zur Herstellung der Folie B werden zunächst 80 Gew.-% γ-Al_{**2**}O_{**3**} (Teilchengröße 40 - 50 nm) in Wasser dispergiert. Anschließend erfolgt die Homogenisierung mit Hilfe einer wäßrigen PVA-Lösung (Mowiol^{**R**} 4-86). Der Feststoffgehalt bezüglich Korund wird dabei auf 60 Gew.-% gesenkt. Die PVA-Lösung enthält 25 Gew.-% Bindemittel-Granulat.

Anschließend wird der Schlicker über Foliengießen und Trocknung zu einer Schicht mit einer Dicke von 20 µm verarbeitet.

Darauf wird die dünne Folie B auf die Substratfolie A laminiert und der so erhaltenen Grünkörper wird 2 Stunden lang bei 1550°C gesintert. Die lineare Schwindung beider Folien beträgt 30%. Das Resultat ist eine 14 µm dicke dichte Al_{**2**}O_{**3**}-Schicht auf einem 1 mm dicken porösen Träger.

## Patentansprüche

1. Verfahren zur Herstellung von mehrschichtigen Verbundwerkstoffen, die mindestens eine schwindungsangepaßte keramische Werkstoff-Schicht umfassen, deren Schwindungsverhalten beim Sintern an die restliche(n) Werkstoff-Schicht(en) angepaßt werden soll, wobei die Schichten des Verbundwerkstoffes über eine Sintertechnik verbunden werden, dadurch gekennzeichnet, daß als Ausgangsmaterial für diese mindestens eine keramische Werkstoff-Schicht ein solches eingesetzt wird, dessen Keramik-bildender Bestandteil im wesentlichen besteht aus:
(a) mindestens einem keramischen Pulver (i) mit Teilchen einer Größe von bis zu 500 nm; oder
(b) mindestens einem keramischen Pulver (i) wie in (a) definiert in Mischung mit mindestens einem Pulver (ii) aus mindestens einer sinterinhibierenden Substanz mit einer Teilchengröße gleich oder kleiner derjenigen des Pulvers (i); oder
(c) mindestens einem keramischen Pulver (i) wie in (a) definiert in Mischung mit mindestens einem keramischen Pulver (iii) mit einer Teilchengröße oberhalb derjenigen des eingesetzten Pulvers (i) und bis zu 500 µm;
wobei im Fall (a) mindestens eine weitere keramische Werkstoff-Schicht vorliegt, deren Keramik-bildendes Ausgangsmaterial aus mindestens einem keramischen Pulver (iii) wie in (c) definiert besteht, das in Form von Agglomeraten vorliegt, und die keramischen Werkstoff-Schichten über einen gemeinsamen Sinterzyklus verbunden werden.

2. Verfahren nach Anspruch 1, dadurch gekennzeichnet, daß die restliche(n) Werkstoff-Schicht(en) des Verbundwerkstoffes aus keramischen und/oder metallischen Werkstoffen und/oder aus Glas ausgewählt ist bzw. sind.

3. Verfahren nach irgendeinem der Ansprüche 1 und 2, dadurch gekennzeichnet, daß die keramischen Werkstoffe von Metall(misch)oxiden und Carbiden, Nitriden, Boriden, Siliciden und Carbonitriden von Metallen und Nichtmetallen abgeleitet sind.

4. Verfahren nach irgendeinem der Ansprüche 1 bis 3, dadurch gekennzeichnet, daß die Teilchengröße im keramischen Pulver (i) bis zu 300 nm und insbesondere bis zu 200 nm beträgt.

5. Verfahren nach irgendeinem der Ansprüche 1 bis 4, dadurch gekennzeichnet, daß mindestens eines der eingesetzten keramischen Pulver mit kurzkettigen organischen oder metallorganischen Verbindungen oberflächenmodifiziert ist.

6. Verfahren nach irgendeinem der Ansprüche 1 bis 5, dadurch gekennzeichnet, daß mindestens eines der keramischen Pulver zunächst in ein Agglomerat umgewandelt wird, das dann thermisch nachbehandelt wird, um die Sinteraktivität einzustellen.

7. Verfahren nach irgendeinem der Ansprüche 1 bis 6, dadurch gekennzeichnet, daß im Fall (b) oder (c) im Verbundwerkstoff mindestens eine weitere keramische Werkstoff-Komponente vorliegt und das Keramik-bildende Ausgangsmaterial dafür ausgewählt ist aus einem Pulver (iii) wie in Anspruch 1 definiert, z.B. einem keramischen Pulver (iv), in dem Primärteilchen einer Größe von bis zu 500 nm, vorzugsweise bis zu 300 nm, in Form von Agglomeraten vorliegen.

8. Verfahren nach irgendeinem der Ansprüche 1 bis 7, dadurch gekennzeichnet, daß die chemische Zusammensetzung der eingesetzten Pulver (i), (iii) und (iv) die gleiche ist.

9. Verfahren nach irgendeinem der Ansprüche 1 bis 8, dadurch gekennzeichnet, daß der Verbundwerkstoff eine aus keramischen Folien aufgebaute mehrschichtige Struktur aufweist.

10. Verfahren nach Anspruch 9, dadurch gekennzeichnet, daß der Verbundwerkstoff ein Gradientenwerkstoff ist.

11. Verfahren nach Anspruch 9 oder 10, dadurch gekennzeichnet, daß der Verbundwerkstoff eine Metallkomponente umfaßt.

12. Verbundwerkstoffe, erhältlich nach dem Verfahren gemäß irgendeinem der Ansprüche 1 bis 11.

13. Verwendung der Verbundwerkstoffe nach Anspruch 12 als Filter bzw. Filter-Komponenten.

## Claims

1. A process for producing multi-layer composites which comprise at least one shrinkage-matched layer of ceramic material whose shrinkage behaviour on sintering is to be matched to the remaining material layer(s), said composite layers being joined by a sintering technique, characterized in that the starting material for said at least one layer of ceramic material is selected such that the ceramic-forming constituent of the same consists essentially of:
(a) at least one ceramic powder (i) comprising particles having a size of up to 500 nm;
(b) at least one ceramic powder (i) as defined in (a) in admixture with at least one powder (ii) comprising at least one sintering-inhibiting substance having a particle size equal to or smaller than that of the powder (i); or
(c) at least one ceramic powder (i) as defined in (a) in admixture with at least one ceramic powder (iii) having a particle size above that of the powder (i) used and up to 500 µm,
there being present, in case (a), at least one further ceramic material layer whose ceramic-forming starting material consists of at least one ceramic powder (iii), as defined in (c), which is present in the form of agglomerates, and said ceramic material layers being joined in a joint sintering cycle.

2. A process according to Claim 1, characterized in that the remaining material layer(s) of the composite is or are selected from among ceramic and/or metallic materials and/or glass.

3. A process according to Claim 1 or 2, characterized in that the ceramic materials are derived from metal (mixed) oxides and carbides, nitrides, borides, silicides and carbonitrides of metals and nonmetals.

4. A process according to any of Claims 1 to 3, characterized in that the particle size of the ceramic powder (i) is up to 300 nm and in particular up to 200 nm.

5. A process according to any of Claims 1 to 4, characterized in that at least one of the ceramic powders used is surface-modified with short-chain organic or organometallic compounds.

6. A process according to any of Claims 1 to 5, characterized in that at least one of the ceramic powders is first converted into an agglomerate which is then heat treated in order to set the sinter activity.

7. A process according to any of Claims 1 to 6, characterized in that at least one further ceramic material component is present in the composite and the ceramic-forming starting material for this component is selected from a powder (iii) as defined in Claim 1, e.g. a ceramic powder (iv), in which primary particles having a size of up to 500 nm, preferably up to 300 nm, are present in the form of agglomerates.

8. A process according to any of Claims 1 to 7, characterized in that the chemical composition of the powders (i), (iii) and (iv) used is the same.

9. A process according to any of Claims 1 to 8, characterized in that the composite has a multilayer structure composed of ceramic sheets.

10. A process according to Claim 9, characterized in that the composite is a gradient material.

11. A process according to Claim 9 or 10, characterized in that the composite includes a metal component.

12. Composites obtainable by the process according to any of Claims 1 to 11.

13. The use of the composites according to Claim 12 as a filter or filter component.

## Revendications

1. Procédé de fabrication de matériaux composites multicouches comprenant au moins une couche en un matériau céramique s'adaptant au retrait, dont le comportement de retrait lors du frittage doit s'adapter à l'autre ou aux autres couche(s), les différentes couches formant le matériau composite étant reliées les unes aux autres par frittage, caractérisé par le fait que l'on utilise comme matériau de départ formant ladite couche en matériau céramique au nombre d'au moins un, un matériau dont la fraction céramisable est constituée essentiellement :
(a) d'au moins une poudre céramique (i) comprenant des particules ayant une taille allant jusqu'à 500 nm, ou
(b) au moins une poudre céramique (i) telle que définie dans (a) mélangée avec au moins une poudre (ii) dau moins une substance inhibitrice de frittage dont les particules ont une taille identique ou inférieure à celle des particules de la poudre (i), ou
(c) au moins une poudre céramique (i) telle que définie dans (a) mélangée avec au moins une poudre céramique (iii) dont les particules ont taille supérieure à celle des particules de la poudre (i) et pouvant aller jusqu'à 500 µm,
dans le cas (a), au moins une autre couche céramique étant présente dont le matériau de départ céramisable comprend au moins une poudre céramique (iii) telle que définie dans (c), présent sous forme d'agglomérats, et les couches céramiques étant liées les unes aux autres par un cycle de frittage commun.

2. Procédé selon la revendication 1, caractérisé par le fait que le(s) matériau(x) de la ou des autres couches du matériau composite sont choisis parmi les matériaux céramiques et/ou les matériaux métalliques et/ou le verre.

3. Procédé selon l'une quelconque des revendications 1 et 2, caractérisé par le fait que les matériaux céramiques sont dérivés d'oxydes métalliques (mixtes) et de carbures, de nitrures, de borures, de siliciures et de carbonitrures d'éléments métalliques et non métalliques.

4. Procédé selon l'une quelconque des revendications 1 à 3, caractérisé par le fait que la taille des particules de la poudre céramique (i) peut atteindre 300 nm et en particulier 200 nm.

5. Procédé selon l'une quelconque des revendications 1 à 4, caractérisé par le fait qu'au moins une des poudres céramiques utilisées est modifiée en surface avec des composés organiques ou organométalliques à chaîne courte.

6. Procédé selon l'une quelconque des revendications 1 à 5, caractérisé par le fait qu'au moins une des poudres céramiques est d'abord convertie en agglomérats qui sont ensuite soumis à un posttraitement thermique, ayant pour but d'ajuster l'activité de frittage.

7. Procédé selon l'une quelconque des revendications 1 à 6, caractérisé par le fait que, dans le cas (b) ou (c), au moins une autre composante céramique est présente dans le matériau composite et que le matériau de départ céramisable de celle-ci est une poudre (iii) telle que définie dans la revendication 1, par exemple une poudre céramique (iv) constituée de particules primaires ayant une taille allant jusqu'à 500 nm, de préférence jusqu'à 300 nm, et qui sont présentes sous forme d'agglomérats.

8. Procédé selon l'une quelconque des revendications 1 à 7, caractérisé par le fait que les poudres (i), (iii) et (iv) utilisées ont la même composition chimique.

9. Procédé selon l'une quelconque des revendications 1 à 8, caractérisé par le fait que matériau composite présente une structure multicouche constituée de feuilles céramiques.

10. Procédé selon la revendication 9, caractérisé par le fait que le matériau composite est un matériau à gradient.

11. Procédé selon la revendication 9 ou 10, caractérisé par le fait que le matériau composite comprend une composante métallique.

12. Matériaux composites que l'on peut obtenir par un procédé selon l'une quelconque des revendications 1 à 11.

13. Utilisation des matériaux composites selon la revendication 12, en tant que filtre ou composantede filtre.
